# EUROPEAN PATENT APPLICATION

(11) **EP 2 056 274 A1**
(43) Date of publication of application: **06.05.2009**
(21) Application number: 07021370.7
(22) Date of filing: 02.11.2007
(51) Int. Cl.: G09B 1/06, G09B 19/00

(54) **Clothes for infant education**

(71) Applicant: Yoon, Mok, Bundang-dong, Bundang-gu Seongnam-si, Gyeonggi-do 463-030 (KR)
(72) Inventor: Yoon, Mok, Bundang-dong, Bundang-gu Seongnam-si, Gyeonggi-do 463-030 (KR)
(74) Representative: Luderschmidt, Schüler & Partner

(57) **Abstract**

As for clothes for infant according to the present invention, it consists of and is characterized as followings: the base part embodied to be able to be detachably attached on surface of clothes; the educational auxiliary member detachably attached on the above base part but having a shape among as a plane or a solid body including a educational contents which consists of any of character, picture, digit, and shape and contains education content for infant and; a coupling auxiliary member which consists of any of a button, a velcro tape, a zipper, a magnet, a hook, and combination of a projected rod and a coupling groove and also, provides coupling ability of attachment and detachment on any of the above clothes and the above base part, or any of the above base part and the above educational auxiliary member.

Through clothes for infant education according to the present invention, an environment, which infant can take education feeling sight and body heat of educators such as parents, etc, is provided. Thereupon, infant can gain emotional settlement and there are merits that educators can smoothly and naturally teach infant on combination and relation between various objects by providing the base part having shape or content having relation with educational contents like shape or content contained in educational auxiliary member as well.

## Description

### Technical Field

The present invention is related to clothe for infant's education furnished with educational auxiliary member by the medium of a base part, more particularly, to clothes for infant's education to have infant feel sense of intimacy with a person in charge of infant education as well as to show educational effect by face-to-face education between infant and a person in charge of infant education through a procedure that infant directly touches and sees both of a educational auxiliary member and the base part to form the educational auxiliary member having various educational contents on clothes of parents, grandparents, teachers, etc to make development of infant's intelligence and sense possible.

### Background Art

Infant means a newborn baby of about 0 ∼ 36 months, a baby, crawler, toddler, etc and during these periods and according to growth of each period, physical movement development, emotional development, linguistic development, the advancement of human knowledge, etc will be achieved and also, parents provide their child with various educational material for smooth and efficient development of each such field.

Referring to traditional theory as known so far, through the five senses such as seeing, touching, listening, smelling, etc, infant's intelligence development is possible, also, he or she shows more sensible interest on materials having color and shape among educational materials, and he or she shows different improvement speed according to quantity and quality that he or she accepts before 3 years old.

Actually, according to experimental result of Dr. White in U.S., he divided infants by 2 groups to confirm whether baby grows up by itself or its growth depends on environment and its surrounding people and then, he experimented as the following.

As for the first group, nurses treated infants from 6 to 36 days after birth putting on with nursing clothes without any pattern on it and as for the second group, nurses, who putted on shirt having colors and patterns, face-to-face watched infant after nursing.

As the result, infants in the second group showed more active movement than infants in the first group, while showed 2 months faster trial to stretch out their hands to grab an object.

Through such infant learning theory, currently, many parents have already realized it and they have provided their child with learning chances that their child can realize bright and beautiful color (visual learning) by using various kinds of toys, sticker, character, etc, sound (acoustic learning) by using chime, etc, and feeling (feeling learning) by touching and rubbing.

### Disclosure of Invention

### Technical problem

Presently, as for play studying instruments such as toys for infant, etc, parents first show how to play them to infant, arouse infant's interest, and then, infant plays with it by itself. Of course, persons in charge of education including parents can play them with infant together, but such education is basically performed in order that eyes of both of parents and infant are focused on playing instruments. Therefore, it is general that infant himself or herself grabs it and parents watch infant's playing beside him or her and help him or her to properly play them.

Infant instinctively tries to find emotional stability through throwing himself or herself in parents' arms or feeling parents' body heat. Thereupon, playing instruments separated from parents have limits to deliver education contents that infant can directly feel parents' body heat.

Namely, in babyhood, emotional education that infant can feel parents' existence through feeling parents' body heat and directly staring at parents' sight should be achieved, which is a problem connected directly with whether infant could grow up having plentiful sensitivity in future.

That is to say, perhaps, existing various playing instruments might provide an environment for developing a specific sense but it is not sufficient to providing an environment for building character that infant can feel parents' existence and their warm chest, directly staring at parents' sight.

Referring to No. 5,957,692, U.S. Patent that is a technology to attach playing instrument on clothes, it has seen that infant play a playing instrument by himself or herself through inversely attaching playing instrument of various methods to infant's (or child's) clothes. According to such technology, although its uniqueness which infant can play the playing instrument attached on his or her clothes by himself or herself was recognized, such playing instrument is for having infant play by himself or herself rather than for playing with parents together. Therefore, it has a problem that it is difficult to be used for realizing humanity education through parents.

Consequently, there is need for developing clothes for pursuing development of studying and humanity education at once by attaching playing instrument on educators' clothes such as parents, teacher, etc, although playing instrument is attached on clothes to plan development of infant's intelligence.

### Technical Solution

The present invention is proposed to solve the above problems and also, the present invention provides educational auxiliary member for clothes of educators including parents, etc. However, in order to cultivate spatial perception of infant and also, provide various environments for intelligence development, as a basic purpose of the present invention, the present invention provides clothes including educational auxiliary member, which consists of various educational contents, inside base part designed to be detachably attached on clothes in various methods.

As another object of the present invention, the present invention provides clothes itself that can be used as educational contents by forming the base part itself as shapes such as a blackboard, a window, a clock, an abacus, a frame, a pocket, etc.

As a still further object of the present invention, the present invention is the development of infant's tactile organ by providing infant with various senses of touch through applying different roughness from clothes' surrounding part in the base part or applying separate embossing treatment in the base part.

As yet another further object of the present invention, the present invention has educational auxiliary member or the base part detachably attached on clothes by using coupling auxiliary members such as a magnet, a velcro tape, a zipper, a hook, a button, a string, etc

As described above, according to the present invention, clothes for infant education provides various advantageous effects, such as;
1) Feeling sight and body heat of educators such as parents, etc, the present invention provides an environment which infant is taken education and also, infant feel emotional stability,
2) By providing a base part having shape and content have association with education contents such as shape or contents included in the educational auxiliary member, infant can be advantageously and naturally educated on combination/association relation of objects,
3) By providing the base part having different coefficient of friction from surrounding raw material or including embossing part, infant can learn variety of tactile feeling, which is efficient for developing various senses of feeling,
4) By forming a pocket and a string on the base part, infant is provided with spatial and sensible awareness and at the same time,
5) Through providing three-dimensional base part such as a frame, a blackboard, a clock, etc, by realizing connection relation with various educational auxiliary members, infant has an effect to help him or her to improve his or her intelligence.

Other objects and further scope of the applicability of the present invention will become apparent from the detailed description to follow, taken in conjunction with accompanying drawings wherein like parts are designated by like reference numerals.

### Brief Description of Drawings

Fig. 1a is a schematic diagram to show a brief embodiment of clothes for infant which the educational auxiliary member is installed on the base part of ladybird shape.
Fig. 1b is a perspective view to illustrate brief embodiment of educational auxiliary member according to the present invention.
Fig. 2 is a schematic diagram to show a brief embodiment of clothes for infant which the educational auxiliary member is installed on the base part of apply tree shape.
Fig. 3 is a diagram illustrating how the base part is attached on clothes by using a coupling auxiliary member.
Fig. 4a, 4b, and 4c are schematic diagrams illustrating a coupling auxiliary member of band shape.
Fig. 5 is a partially magnified perspective view to show the base part having a pocket.
Fig. 6a and 6b are schematic diagrams illustrating that an embossing auxiliary member is applied for surface of the base part according to the present invention.
Fig. 7a and 7b are schematic diagrams illustrating that the base part according to the present invention is formed by a blackboard.
Fig. 8 is a schematic diagram illustrating that the base part according to the present invention is formed by a clock.
Fig. 9a and 9b are schematic diagrams illustrating that the base part according to the present invention is formed by a board type which can arrange the educational auxiliary member.
Fig. 10a and 10b are schematic diagrams illustrating that the base part according to the present invention is formed with a detachedly attachment/detachment cover.
Fig. 11 a and 11b are schematic diagrams illustrating that the base part according to the present invention is formed by a frame type.
Fig. 12 is a schematic diagram to show a brief embodiment of clothes for infant that the educational auxiliary member is installed on the base part of a washline shape.

### Best Mode

As for clothes for infant according to the present invention, clothes for infant education is characterized in that it comprises:
- a base part detachable formed on surface of clothes;
- a educational auxiliary member detachable attached on the base part, wherein the educational auxiliary member have any shape of plane or a solid body including a educational contents which consists of any of character, picture, digit, and shape and contains education content for infant;
- a coupling auxiliary member which consists any of a button, a velcro tape, a zipper, a magnet, a hook, and combination of a projected rod and a coupling groove and, also provides an ability of detachable coupling between the clothes and the base part, or between the base part and the educational auxiliary member.

Through clothes for infant education according to the present invention, an environment, which infant can take education feeling sight and body heat of educators such as parents, etc, is provided. Thereupon, infant can gain emotional settlement and there are merits that educators can smoothly and naturally teach infant on combination and relation between various objects by providing the base part having shape or content having relation with educational contents like shape or content contained in educational auxiliary member as well.

### Mode for invention

In order to achieve the above objects, as for clothes for infant according to the present invention, it consists of and is characterized as followings: the base part formed to be able to be detachably attached on surface of clothes; the educational auxiliary member detachably attached on the above base part but having a shape among as a plane or a solid body including a educational contents which consists of a object between character, picture, digit, and shape and contains education content for infant and; a coupling auxiliary member which consists any of a button, a velcro tape, a zipper, a magnet, a hook, and combination of a projected rod and a coupling groove and also, provides coupling ability of attachment and detachment on any of the above clothes and the above base part, or any of the above base part and the above educational auxiliary member.

In addition, in clothes for infant education according to the present invention, the base part is characterized in that it has different coefficient of friction from surrounding part of clothes or being formed as tridimensionality like a clock, a blackboard, a string, etc in more detail.

Together with them, the base part is characterized in that it includes coupling auxiliary member along around the above base part and also, being able to accommodate the above educational auxiliary member between the above base part and the above attachment/detachment cover by additionally preparing attachment/detachment cover having window which can be attached and detached on the above base part but consists of synthetic resins of transparency or translucency on a color between specific colors.

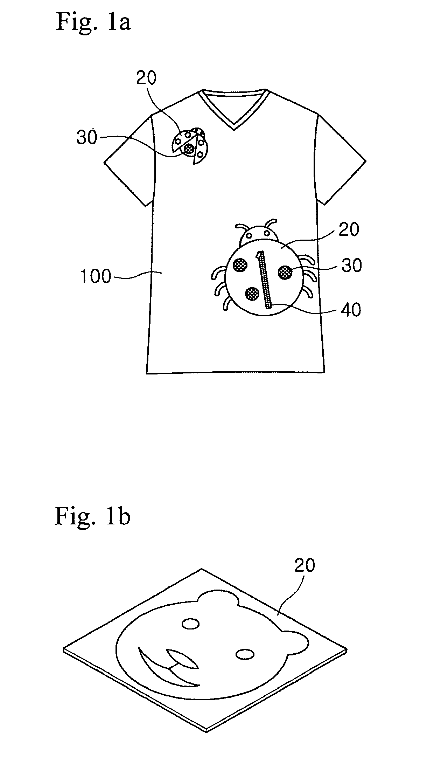

Fig. 1a is a schematic diagram to show a brief embodiment of clothes for infant which the educational auxiliary member is installed on the base part of ladybird shape and fig. 1b is a perspective view to illustrate brief embodiment of educational auxiliary member according to the present invention.

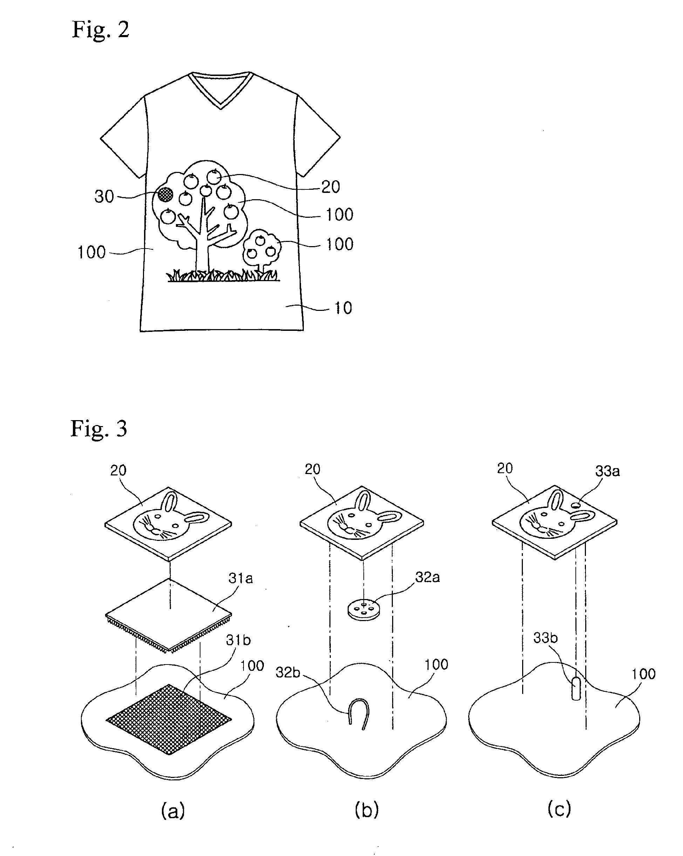

Fig. 2 is a schematic diagram to show a brief embodiment of clothes for infant which the educational auxiliary member (20) is installed on the base part (100) of applying tree shape.

In the present invention, clothes (10) should be understood as the whole clothes which educators such as parents, grandmother, kindergarten teacher, grandparents, etc put on and also, clothes in Fig.1 of the present invention includes pants although the clothes is drawn as a jacket in Fig.1. Of course, in addition, range of clothes in Fig.1 is surely applied for pseudo-clothes such as an apron, a pinafore, etc that we can generally put on in our whole body.

As shown in fig. 1a or fig. 2, clothes for infant education according to the present invention is formed on the surface of clothes (10) and educational auxiliary member (20) is devised to be detachably attached on the base part (100) consisting of various shapes having specific organism shapes or characters such as a ladybird, a butterfly, apple tree, etc or specific meaning is installed.

As shown in fig. 1b, in the present invention, the educational auxiliary member (20) is known as integrated meaning on a card, a cushion, a toy, a mirror, etc which contain various education contents such as a picture, a character, a pattern, a letter such as korean or English, a sign such as digit or calculation symbol, combination of various colors, a mirror, sound making tool like a chime.

Educational auxiliary member (20) can be formed in a plane type like card or a solid body like cushion and also, the educational auxiliary member (20) can be produced as a plurality of kind in order to deliver various visual and tactile concepts to infant. In addition, when the base part (30) is formed in a solid body type and it secures inside space (like when the basic part is formed in frame type. it will be explained later), because the auxiliary member can be closely adhesively fixed according to area inside the base part (100) or the auxiliary member can be moved around within a fixed range, it also can provide a characteristic to improve perception function of movement to infant.

In the present invention, the base part (100) itself includes the educational auxiliary member (20) or the base part can be detachably attached on a specific part of clothes (10) under condition that it is equipped with educational auxiliary member (20) in separately attaching method. That is to say, the base part (100) can include the educational auxiliary member (20) under condition that it is separated from the educational auxiliary member (20). But by adding figure or shape on the base part, the base part (100) itself can be a educational auxiliary member (20). Also, it is desirable for increasing educational relation that the base part (100) basically has a shape having close connection with educational auxiliary member (20) and education contents in their meanings.

The base part (100) can have various shapes such as a blackboard, a frame, a watch, a board, etc according to its functions, which is concretely explained as follows.

Fig. 3 is a diagram illustrating how the base part is attached on clothes by using a coupling auxiliary member.

As shown in fig. 3, the coupling auxiliary member (30) consists of one of basic coupling methods such as a velcro tape, combination of button and ring, a zipper, combination of snap buttons, a hook, a magnet, etc and it plays role as a functional medium to couple clothes (10) with the base part (100) and also, the base part (100) with the educational auxiliary member (20).

Illustratively, fig. 3(a) schematizes combination of velcro tapes (31 a and 31b), fig. 3(b) schematizes combination of a button (32a) and a ring (32b), and also, fig. 3(c) schematizes combination of a coupling groove (33a) and a projected rod (33b). Therefore, according to how to apply coupling auxiliary members, besides the above methods, the whole coupling methods, which are frequently used presently, including a magnet, combination of a female snap and a male snap, a zipper, a hook, etc can be used as the coupling auxiliary member (30).

When the coupling auxiliary member (30) is installed between the educational auxiliary member (10) and the base part (100), it can be coupled with the educational auxiliary member (10) or the base part (100) after attached on the rear side of the educational auxiliary member (10) and the front side of the base part (100) or after separately formed. (Of course, it is the same as coupling between the base part and clothes)

Also, the present invention has position or shape of the coupling auxiliary member (30) given a meaning from shape expressed in the base part (100). For example, in the case of a ladybird, the present invention has the coupling auxiliary member (30) formed at a point of the ladybird, which plays role as a medium to make combination having interconnection (including relation) between the base part (100) and the educational auxiliary member (30).

For example, as for fig. 1, in the case that the base part (100) has shape of a ladybird, the educational auxiliary member (10) is formed as shape of alphabet and shape of digit to make an imaginary shape which pattern of a ladybird is formed as shape of a character as well as shape of an insect attached on the coupling auxiliary member (30) formed on a point (a pattern) of a ladybird's back.

Also, just like fig. 2, in the case that the base part (100) has shape of an apple tree, the coupling auxiliary member (30) is formed around a fruit of apple and then, the educational auxiliary member (10) having shape of fruit and other shape of picture can be attached.

Namely, shape of the base part (10) pursues diversity but through extracting one or more symbolic parts (in the above example, specific parts such as fruit, point, pattern, etc) inside shape of the base part (10), the coupling auxiliary member (30) is formed and then, the educational auxiliary member (10) having related contents is attached in order that shape and meaning of the base part (100) in the coupling auxiliary member (30) can make sense.

Through such relationship between the base part (100) and the educational auxiliary member (10), infant can enjoy a chance to learn a link (interrelationship) of objects and relation of combination/union and furthermore, for example, by having infant exert his or her imagination like that apple tree produces alphabet fruit, infant can enjoy educational effect of his or her imagination increase as well.

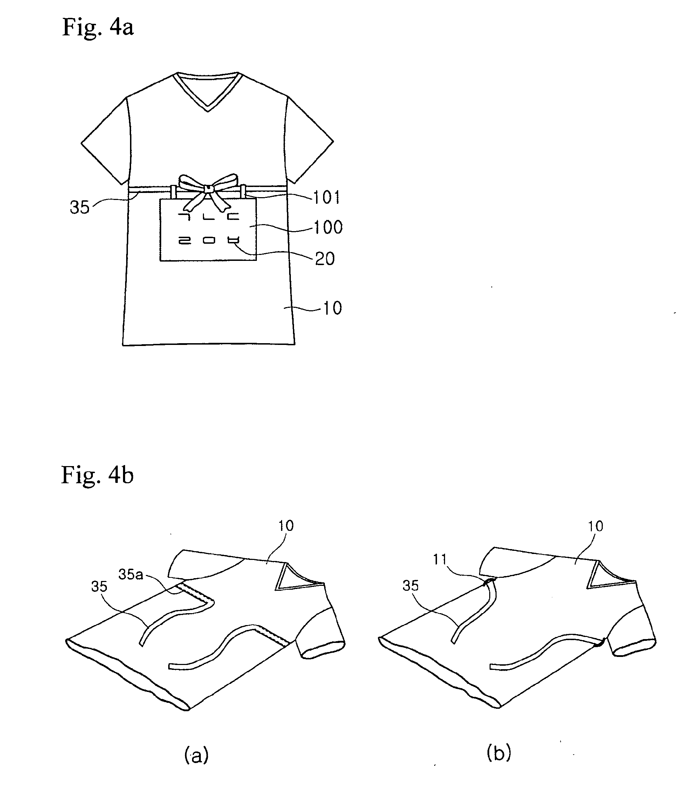

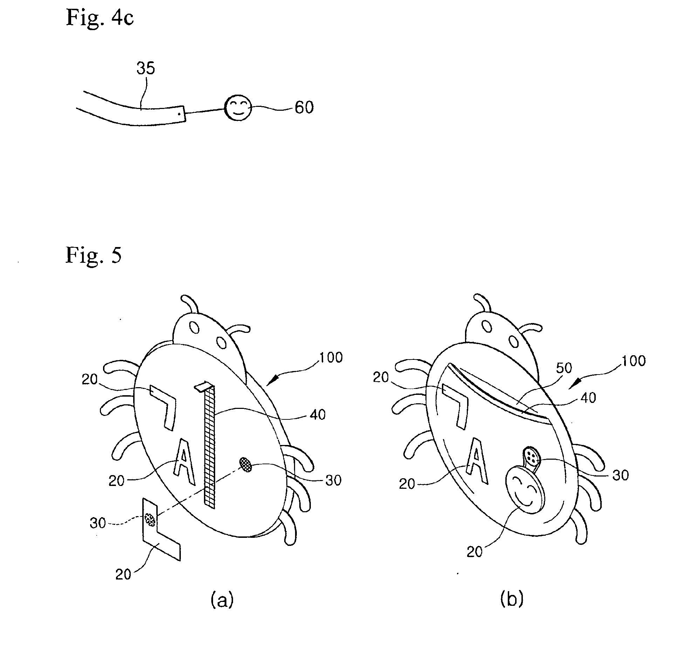

Fig. 4a, 4b, and 4c are schematic diagrams illustrating a coupling auxiliary member of band shape.

The coupling auxiliary member according to fig. 4a consists of extended band (35) for wrapping around waist of clothes (10) and in the case of using the band (35), the base part (100) has at least one ring (101) on the upper part.

That is to say, ring (101) of the base part (100) is passed through the band (35) and then, after having the band (35) made a knot by ribbon shape, the base part (100) can be fixed on clothes (10) through the band (35). At this time, various educational auxiliary members (20) can be installed on the base part (100).

As shown in fig. 4b, besides parts connected to the base part (100), the band (35) includes backstitch part (35a) fixed adhesively on the clothes through backstitch or it can be inserted into the clothes (100) through connecting part (11) formed separately on the clothes (100).

The band (35) plays role as medium to fix the base part (100) on the clothes (10) and also, it can adjust size of the clothes as well.

Referring to fig. 4c, a stopper (60) is formed on end edge of the band (35) (Connection between the band and the stopper is possible through medium like a string). Because the stopper (60) has bigger volume than a ring (101) formed on the base part (100), the stopper (60) can be prevented from easily deviated and also, it has property that it can be contracted by external force because it consists of an elastic body in order that the stopper (60) can be inserted into the ring (101).

Fig. 5 is a partially magnified perspective view to show the base part having a pocket.

The base part (100) three-dimensionally forms a specific part or the whole parts of the whole shape. Therefore, it comes to have a fixed space (50) and also, it has the space used as a pocket. The pocket has a opening and closing part (40) and also, it is formed to put other materials on the pocket through the opening and closing part (40).

In the concrete, in the case of fig. 5(a), it is possible to enter into the space (40) through the opening and closing part (40) of zipper type and in the case of fig. 5(b), it is possible to enter into a space (50) through the opening and closing part (40) of a shape which the forward part is opened.

That is to say, As shown in the diagram, body part of a ladybird, which is illustratively explained, becomes a pocket and also, it is formed to enter into the space (50), which is inner space, through the opening and closing part (40).

Also, As shown in fig. 5(b), when the coupling auxiliary member (30) is formed by using a button, by having the educational auxiliary member (10) having a ring hung on the button, it can possible to express various shapes which the educational auxiliary member (10) is installed on the base part under condition which the educational auxiliary member (10) can be classified by a basic type or a type attached by using a ring.

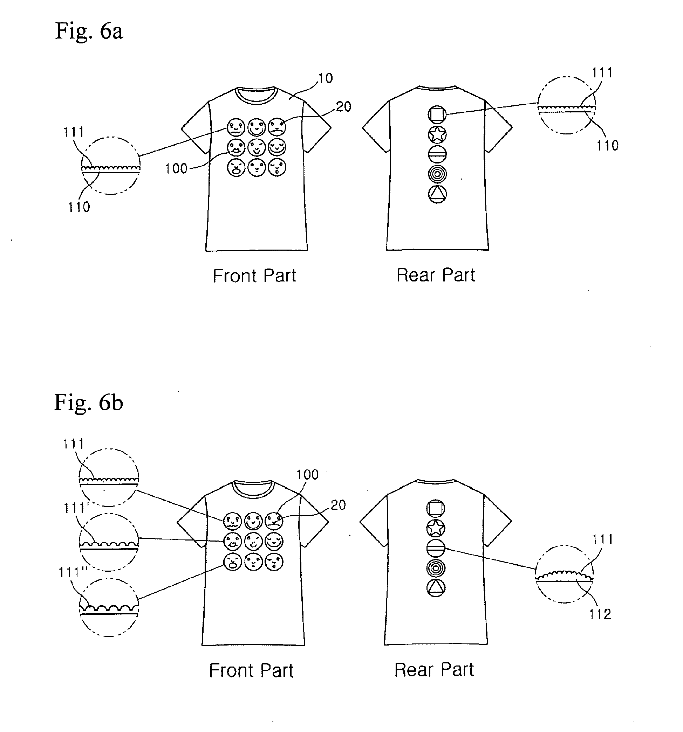

Fig. 6a and 6b are schematic diagrams illustrating that the embossing auxiliary member is applied for surface of the base part according to the present invention.

The base part (100) can be differently formed in roughness of surface itself, namely, the tactile feeling of a material from surface of surrounding clothes (10).

In the concrete, a different material is used from a raw material of the clothes (10) but the material has stronger feeling of a material than the raw material of the clothes, namely, surroundings of the base part (rougher) or it is formed by a weak material (softer), which has infant have other tactile feeling of the clothes (10) through touching the base part (100) and also, stimulates a tactile development of infant. Hereupon, as soft materials, micro-fiber cloth or vinyl cloth, etc can be used and as rough materials, cloth of loose texture, cloth of synthetic resins, etc can be used.

As for degree of roughness of a object, generally, it can be formed by the coefficient of friction of the object. Thereupon, the coefficient of friction of the base part (100) according to the present invention has different roughness from a material of clothes in more roughness or softer roughness than average coefficient of friction of clothes, namely, surrounding part where the base part (100) is attached. Therefore, it can be basically provide separate tactile feeling to infant.

To put it concretely, referring to fig. 6a, under condition that the base part (100) includes the educational auxiliary member (10), a plurality of projections (111) are formed and in the present invention, embodiment of such a plurality of projections (111) is named as the embossing auxiliary member (110).

The above embossing auxiliary member (110) is an example to introduce roughness on surface of the base part (100), which can help infant with tactile development by giving a granular feeling to infant.

Also, referring to fig. 6b, when a plurality of base parts (100) on the clothes (10) are formed, by separately applying size of each projection on the embossing auxiliary member (110) of each base part (100), namely, by forming the smallest sized projections (111), medium-sized projections (111'), and the biggest sized projections (111"), respectively, infant can enjoy different tactile feeling according as infant touches which embossing auxiliary member (110).

In addition, the embossing auxiliary member (110) can be formed in bulging parts (112) projected upward on the whole surface as if they would be a convex lens. Thereupon, according to relatively increasing projected parts as well as providing new tactile feeling, it provides characteristics to more increase contact probability of infant.

Because there is the base part (100) to have conceptual association with the educational auxiliary member or provide roughness, comparing with direct and simple attachment of the educational auxiliary member (20) on clothes (10) itself, it can more help infant to learn association relation of objects and also, it can give feeling and tactile development effect to infant as if he or her would really touch related objects as well by copying practical tactile feeling of objects having specific shape (example, ladybird).

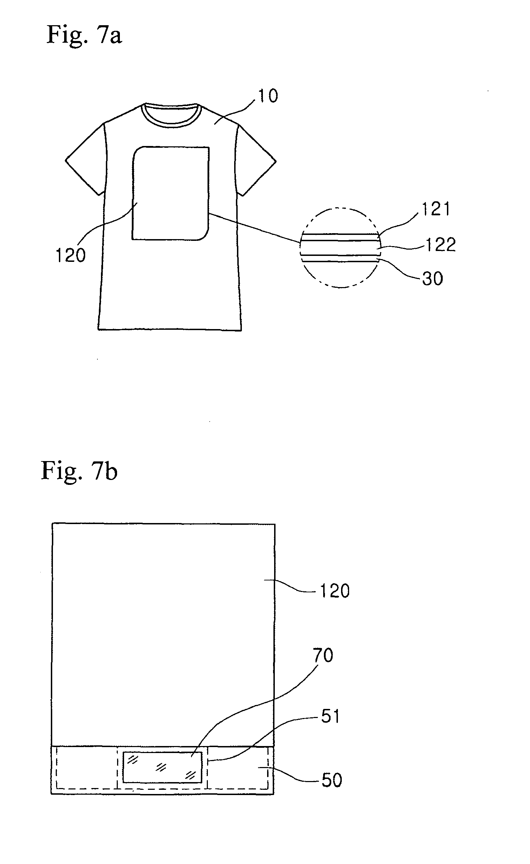

Fig. 7a and 7b are schematic diagrams illustrating that the base part according to the present invention is formed by a blackboard.

As shown in fig. 7a, the base part (100) according to the present invention can be realized by spreading black resin paint (121) (other color also is available) on main board (122) or white resin paint on a magnetism blackboard (120) (a black board like a white board having magnetism).

At this time, the blackboard (120) consists of a flexible material, which prevents a problem that it may not be easily attached on clothes. The blackboard (120) is formed in proper size in order that the blackboard (120) can be easily attached on the front part of clothes but it should not be formed in too small size. Thereupon, it is desirable to have infant widely use the blackboard (120) if possible.

Also, the base part (122) consisting of the blackboard (120) can be detachably attached on clothes (10) with the coupling auxiliary member (30), for example, with the velcro tape (21a).

Fig. 7b illustrates another exemplary method of the blackboard and the space (50) and the transparent window (70), which play role as pocket, are formed around clothes positioned on the bottom of the blackboard (120).

The space (50) is designed to keep an eraser, a pen, etc so infant supplies of small size are prevented from easily lost and also, the space maximizes usage of the blackboard (120) through keeping other objects in it.

The plurality of space (50) can be prepared. That is to say, through sewing, etc, a partition (51) to divide each space (50) is formed and then, two and more spaces (50) can be formed between the partition (50).

In addition, the transparent window (70) made of transparent material on the frond side of the space (50) can be additionally formed and the inside of it can be shown. Thereupon, infant can distinguish a pen and an eraser inside it by naked eyes without putting his or her hand on the space (50).

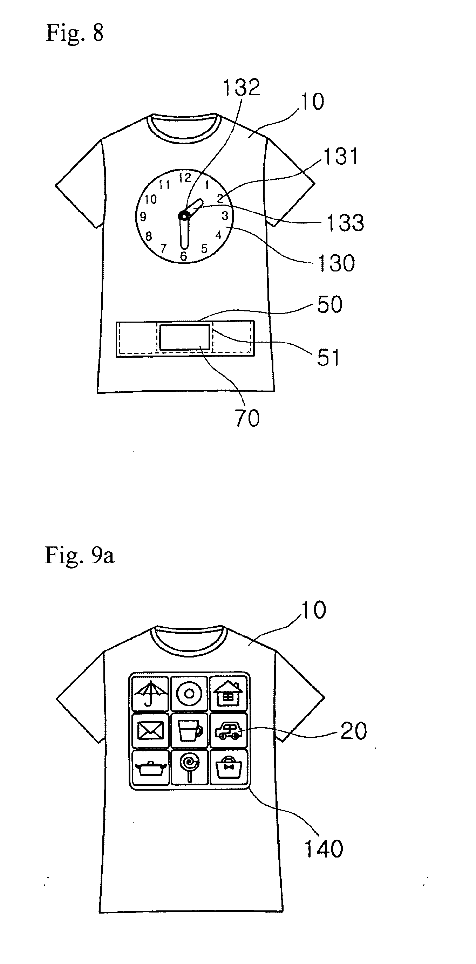

Fig. 8 is a schematic diagram illustrating that the base part according to the present invention is formed by a clock.

According to fig. 8, the base part can be expressed as a clock (130) consisting of a main penal (131) that scale of a clock is marked, a pivot (132) fixed at the center of the main panel (131), and clock needles (133) of a pair that 360° rotation is possible.

In addition, on the bottom of the clock (130), the space (50) and the transparent window (70) can be separately formed like the case of the above fig. 7b and infant can distinguish objects inside the space (50) through the transparent window (70) by naked eyes and necessary objects can be kept in the space (50).

Though such clock (130), infant can directly and specifically rotate the clock needles (133), understand digits, and learn a idea of time.

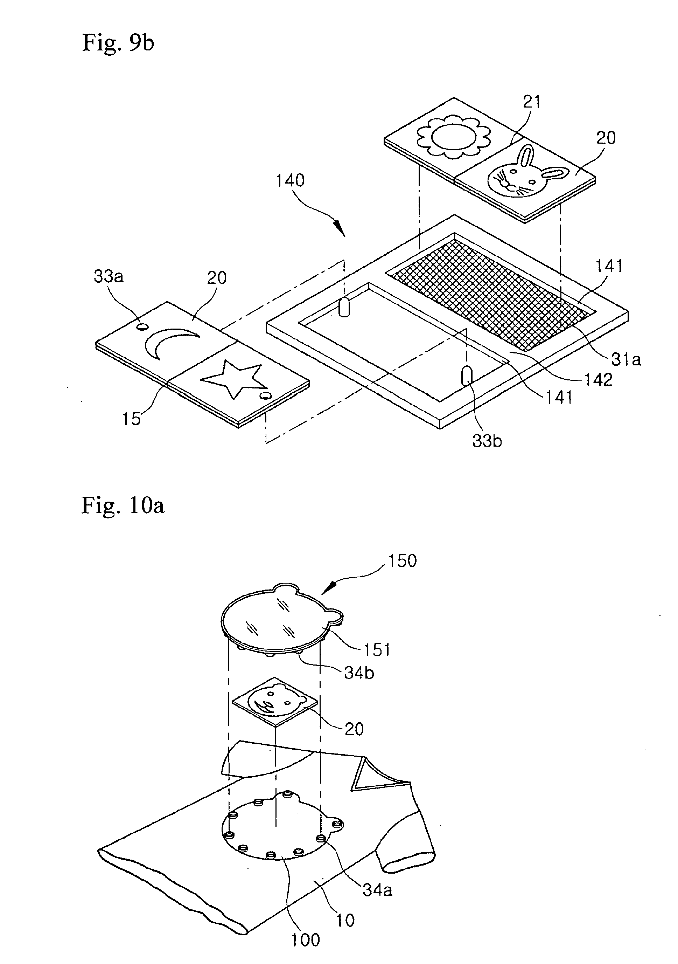

Fig. 9a and 9b are schematic diagrams illustrating that the base part according to the present invention is formed by a board type which can arrange the educational auxiliary member.

As shown in fig. 9a, because the base part formed in the board type provides a space to accommodate the educational auxiliary member (20) which is rightly formed in a card type, by having it have various array structures through the partition (142), the educational auxiliary member (20) of the card type is accommodated in part for arrangement that is a concave space between partitions (142).

In more detail, referring to fig. 9a, the board (140) according to the present invention has partitions (142) formed in order that the educational auxiliary member (20) of a card type in a square (of course, other card types including a rectangular, etc are available) can have other matrix including 2 x 2, 3 x 3, etc and the educational auxiliary member (20) is accommodated in the part for arrangement (141) formed between partitions (142).

On the bottom surface of the part for arrangement (141), the coupling auxiliary member (30) of various types which is illustrated in fig. 3 is formed and the educational auxiliary member (20) can be attached on it. Especially, as for the coupling auxiliary member (30), it is the most desirable that the coupling auxiliary member is formed by using the velcro tape for providing easy attachment and detachment of the educational auxiliary member (20).

Also, as illustrated in fig. 9b, the coupling auxiliary member (30) is formed by the project rod (33b) type and it is possible that the educational auxiliary member (20) having the coupling groove (33a) on the both sides is inserted and combined. In this case, it is also possible that the educational auxiliary member (20) be folded and tied together around a central part (15) which watertight treatment is perembodied, such as a book.

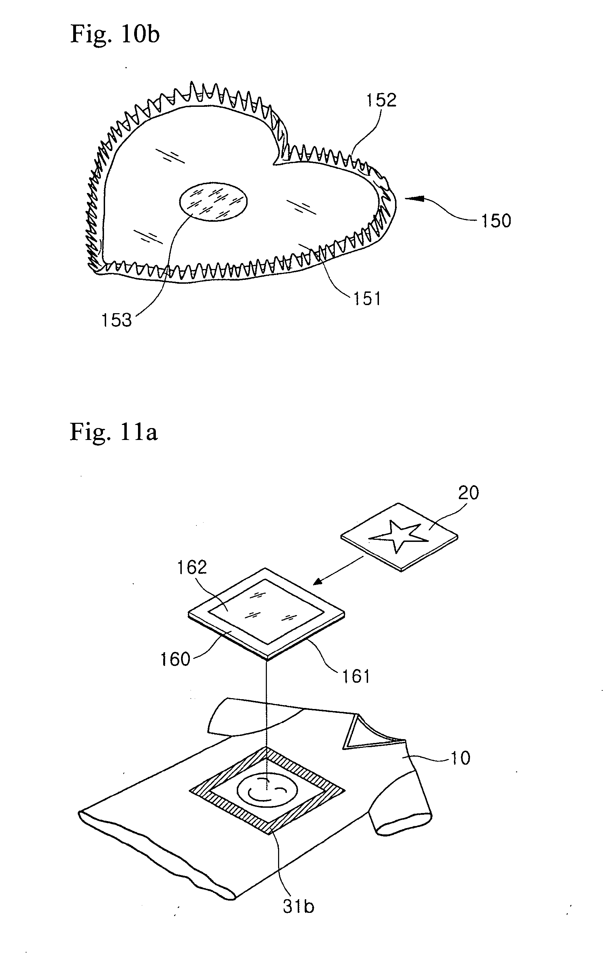

Fig. 10a and 10b are schematic diagrams illustrating that the base part according to the present invention is formed with a attachment/detachment cover.

In the concrete, the attachment/detachment cover (150) adhered to clothes by using the coupling auxiliary member (34a and 34b) (in more detail, combination of a female snap and a male snap) as medium. Hereupon, the base part (100) means a part to have the attachment/detachment cover (150) adhered. According to such method, the educational auxiliary member (20) is basically accommodated in space on the base part (10) and also, it is possible that the educational auxiliary member (20) is formed on the base part (100) itself through printing, etc.

As shown in fig. 10a, the attachment/detachment cover (150) and the base part (100) according to the present invention can be formed in animal pattern, shape of character, and other various shapes in order to raise visual joyfulness of infant.

The attachment/detachment cover (150) has the window (151) inside the frame making a surrounding line. The window (151) is generally formed by using synthetic resin such as vinyl or cellophane and it is desirable that the window (151) is formed by transparent material and its inside can be distinguished.

Besides the above truths, the window (151) can also be formed by using cellophane paper or other durable synthetic resin materials, which is desirably formed in translucent state. Thereupon, through expressing synthesis effect of a color tone between the window (151) and the educational auxiliary member (20) accommodated inside it, such embodiment usefully provides education effect to have infant recognize various changes of color tone and concept according to change of color.

For example, when the window (151) is formed in yellow cellophane and the educational auxiliary member (20) is formed in red color, by overlapping function of yellow color and red color, infant can learn a phenomenon that combination of both colors is looked like old gold color.

It is common that the window (151) is formed in a plane but it is possible to have the educational auxiliary member (20) in large volume, which consists of the bluging part formed in a little swollen shape considering the educational auxiliary member (20) positioned inside the window (151), easily accommodated in the attachment/detachment cover (150) and the base part (100).

The attachment/detachment cover (150) is adhered by embodiment available for attachment and detachment through coupling between a male snap (34a) of the coupling auxiliary member formed on the surrounding backside and a female snap (34b) formed surrounding the base part (100). But before coupling the attachment/detachment cover (150), the educational auxiliary member (20) is formed inside it. Thereupon, the educational auxiliary member (20) is positioned between the attachment/detachment cover (150) and the base part (100) and then, the educational auxiliary member (20) can be distinguished through the window (151) of the attachment/detachment cover (150).

Fig. 10b is the schematic diagram illustrating a modified example that a separate color formation part (153) and a tactile projection (152) are formed on the attachment/detachment cover (20).

As shown in fig. 10b, the attachment/detachment cover (150) consists of a heart shape, which illustrates possibility of various changes of shape and especially, fig. 10b illustrates that the separate color formation part (153) different from surrounding color in a fixed part of the window (151) is formed.

In the concrete and for example, the separate color formation part (153) has yellow color when part of other window (151) surrounding it is transparent or when surroundings of the window has blue color, by forming it in green color different from color around it, a function that change of color according to mixture of color with the educational auxiliary member (20) can be easily recognized is additionally formed.

Such separate color formation part (153) should not be always formed in only one window (151) but it can be formed in plural numbers with a fixed size or shape.

Also, The tactile projection (152) in a fixed length is additionally formed on outside circumference (frame) of the attachment/detachment cover (50).

Such tactile projection (152) provides a function to decorate the attachment/detachment cover (150) through embodiment using a fabric material like wool and also, it plays role to have tactile function of infant developed when he or she directly touches it as well.

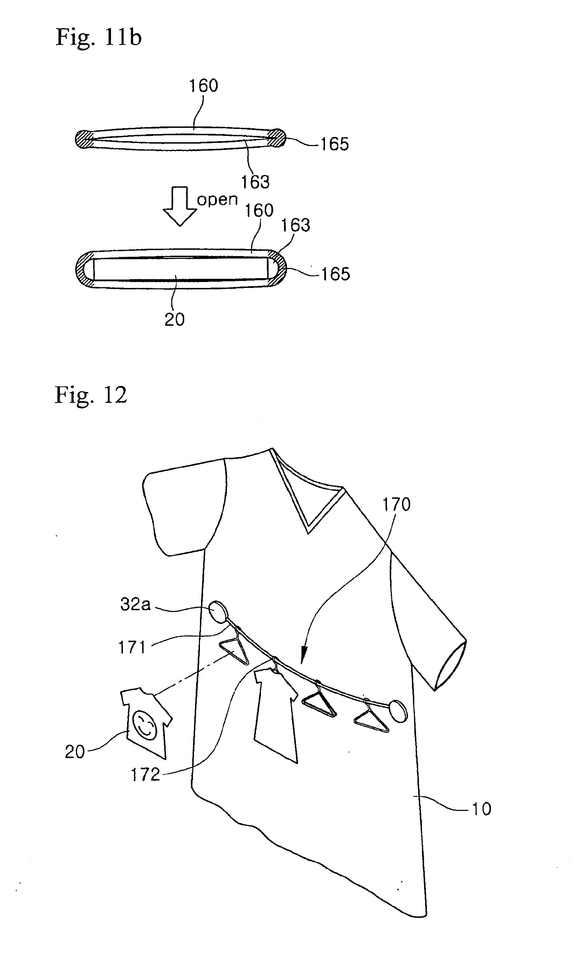

Fig. 11 a and 11b are schematic diagrams illustrating that the base part according to the present invention is formed by a frame type.

Referring to fig. 11a, the base part is formed in the frame. In the concrete, at a part of the clothes (10) that the frame (160) is adhered, in more concrete, at a part corresponding to surrounding of the frame (160), the coupling auxiliary member, for example, the velcro tape (31b) is formed and also, on the back of the frame corresponding to the velcro tape (31b), a coupling auxiliary member is formed.

Because the frame (160) has only its surrounding and the central part, which is inner part of the frame (160), is formed in opened shape, it is possible for infant to directly touch the educational auxiliary member (20) positioned inside it. But as illustrated in fig. 11a, the transparent cover (162) is installed in the part and the educational auxiliary member (20) inside it can be protected.

Also, by forming a side part of the frame (160) in opened structure, the educational auxiliary member (20) can be freely accommodated or pulled out through the side part of the frame (160).

Fig. 11b is a side view illustrating embodiment of a shock-absorbing auxiliary member in the base part formed in the frame according to the present invention.

Like explained so far, the frame (160) according to the present invention guarantees thickness of the side part and it can accommodate the educational auxiliary member (20) in proper thickness. But for example, if thickness of the educational auxiliary member (20) is thinner than thickness of the side part of the frame (160), the educational auxiliary member (20) may restlessly go around instead of having a fixed condition. On the other hand, if thickness of the educational auxiliary member (20) is thicker than thickness of the side part of the frame (160), the educational auxiliary member (20) may not be accommodated in the frame (160). Therefore, if each thickness of each educational auxiliary member (20) is different according to each application, it is difficult that thickness of the side part of the frame (160) shall be fixed in a specific size.

To prevent such problem, as shown in fig. 11b, in the frame (160) according to the present invention, the shock-absorbing auxiliary member (165) is formed in smoothly curved shape on an extended part along by both frames around a opened exit (163) which is straightly extended part around the opened exit (163).

The shock-absorbing auxiliary member (165) is for giving resilience on the side part of the frame (160) around the opened exit (163) and it can be formed by a material of flexibility gel type and a coated layer to protect it. But it is more desirable for conserving durability that it is made of Hyper-flexible P.U (Poly Urethane. that is to say, Hyper-gel) outside surface of which is coated with a flexible protection layer in synthetic resin material.

Normally, such shock-absorbing auxiliary member (165), that is to say, before accommodating the educational auxiliary member (20), is in convex condition, which has the opened exit (163) of the frame (60) closely adhered in a flat type and then, when the educational auxiliary member (20) is accommodated, because it has a property to swell out by elasticity, according as whether the educational auxiliary member (20) is accommodated or according to thickness of the educational auxiliary member (20) in a fixed range, it has an effect that width of the opened exit (163) is flexibly changed.

According to such characteristics, the educational auxiliary member (20) can freely change its thickness and also, it can be tightly and stably adhered closely inside the frame (160).

Fig. 12 is a schematic diagram to show a brief embodiment of clothes for infant that the educational auxiliary member is installed on the base part of a washline shape.

As shown in fig. 12, the base part (100) according to the present invention can be formed in 2-dimensional plane space and tridimentionality, that is to say, a washline shape but although such washline shape can be formed in a plane, it is more desirable that the base part (100) is formed in three dimensions to increase educational effect.

In the concrete, the base part (100) basically consists of strings (170), by installing buttons (32a) that is the coupling auxiliary member at both of end parts, the base part (100) can be formed by hanging clothes (10) between buttons (32a) or hanging string (170) by using buttons, and also, one or more hangers are installed at the string (170).

The hanger (172) is fixed and adhered on the clothes (10) or like a real hanger, by having a shape of tridimentionality, the educational auxiliary member (20) in shape of clothes can be hung on it.

For example, upper part of the hanger (172) is expressed and formed by photos hung on the string (170) and by having lower part of it have a movable tridimentionality shape and also, by having it looked like it is solidly connected on the string as well as having the educational auxiliary member (20) in clothes shape hung on lower part of the hanger (172), infant can be given education on combination relation between tridimentionalities and unique interest and amusement.

In alternative way, the hanger (172) is adhered around the string (170) but by preparing the coupling auxiliary member (30) on surface of the hanger (172), the educational auxiliary member (20) consisting of clothes can be adhered by using the coupling auxiliary member (30).

As explained so far, while embodiments and functions of clothes for infant education according to the present invention have explained by the preceding descriptions and accompanying drawings, they are merely only examples, and spirits of the present invention are not limited on the foregoing description and drawings, and also, various changes and modifications can be made within range of technical principles of the present invention.

## Claims

1. clothes for infant education is **characterized in that** it comprises:
- a base part detachable formed on surface of clothes;
- a educational auxiliary member detachable attached on the base part,
wherein the educational auxiliary member have any shape of plane or a solid body including a educational contents which consists of any of character, picture, digit, and shape and contains education content for infant;
- a coupling auxiliary member which consists any of a button, a velcro tape, a zipper, a magnet, a hook, and combination of a projected rod and a coupling groove and, also provides an ability of detachable coupling between the clothes and the base part, or between the base part and the educational auxiliary member.

2. The clothes for infant education according to claim 1, **characterized in that,**
the coupling auxiliary member is formed by extended band in a fixed length around parts of the clothes and the base part has further a ring in its upper part, the educational auxiliary member is fixed and adhered on the above band, by allowing the ring to pass through the band and then, allowing the band to be tied.

3. The clothes for infant education according to claim 2, **characterized in that,**
at the end of the band, the stopper is further formed in a shape which is larger than a inside diameter of the ring, and the stopper can be compressed by external force because the stopper has flexibility.

4. The clothes for infant education according to claim 1, **characterized in that,**
the base part further includes the educational auxiliary member on its surface or its shape itself.

5. The clothes for infant education according to claim 1, **characterized in that,**
the base part has bigger or smaller friction coefficient than surroundings of clothes where the base part is formed, and **in that** it includes the educational auxiliary member by the base part.

6. The clothes for infant education according to claim 1, **characterized in that,**
the base part further has a embossing auxiliary member consisting of the plurality of projections on its surface.

7. The clothes for infant education according to claim 6, **characterized in that,**
when the plurality of the base part is formed on clothes, the embossing auxiliary member formed on each base part has mutually different size of projections.

8. The clothes for infant education according to claim 1, **characterized in that,**
the educational contents, which is formed on the base part and the educational auxiliary member, has a relationship out of inclusion and connection and also, when the base part consists of a animal and a plant shape, the coupling auxiliary member is formed on a part out of pattern on body, fruits, and points, and **in that** it concludes the educational auxiliary member by the base part.

9. The clothes for infant education according to claim 1, **characterized in that**, the base part comprises;
a pocket having space inside it; and
on surface of the base part, a opening/closing part allowing the educational auxiliary member to be inserted or pulled out through the space of the pocket.

10. The clothes for infant education according to claim 1, **characterized in that,**
the base part consists of the blackboard having a board for writing, and
**in that** the base part consists of clock which has rotating axis to rotate around its center, and has scales for indicating time along around the rotating axis and also, has a pair of clock needle for rotating around the rotating axis, and,
**in that** the base part consists of the board having the part for arrangement formed by the space which can accommodate the educational auxiliary member inside it through, divided in matrix structure by partitions, and also, on the bottom of the part for arrangement, the base part has the coupling auxiliary member so that it accommodate detachably the educational auxiliary member,

11. The clothes for infant education according to claim 1, **characterized in that,**
the coupling auxiliary member is formed along each side of the base part,
the base part further has the attachment/detachment cover which can be freely adhered on the base part and have window made of synthetic resins having any of specific colors or transparent condition as translucent condition, so that the educational auxiliary member can be accommodated between the base part and the attachment/detachment cover.

12. The clothes for infant education according to claim 11, **characterized in that,**
the window has a separate color formation part, which takes a fixed area, to have different color from surroundings.

13. The clothes for infant education according to claim 11, **characterized in that,**
the attachment/detachment cover, which is formed by a plurality of projected points, has the tactile projection for stimulating tactile development of infant.

14. The clothes for infant education according to claim 1, **characterized in that,**
the base part consists of frame having the opened exit that has a frame formed along a circumference, a opened part formed inside the frame, and a part of the frame opened, so that the educational auxiliary member can be freely inserted to the frame through the opened exit.

15. The clothes for infant education according to claim 14, **characterized in that,**
it comprises has the shock-absorbing auxiliary member formed under the condition that the flexible protection layer is coated with Hyper-flexible P.U on extended line of the frame around the opened exit of the frame, and it comprises the educational auxiliary member through the frame.

16. The clothes for infant education according to claim 11, **characterized in that,** the base part comprises:
a pair of buttons positioned in some fixed distance;
a string hung between the buttons and;
a hanger hung on the string,
wherein the educational auxiliary member has clothes-like shaping so as to be connected with the hanger, and it comprises the base part have the educational auxiliary member by the base part.
